# FASCICULE DE BREVET EUROPEEN

(11) **EP 2 232 314 B1**
(45) Date de publication et mention de la délivrance du brevet: **20.03.2013**
(21) Numéro de dépôt: 09704721.1
(22) Date de dépôt: 19.01.2009
(51) Int. Cl.: G02B 6/122, G02B 6/13, H01L 21/20, H01L 29/12

(54) **METHODE D'OBTENTION D'UN MATERIAU STRUCTURE D'OUVERTURES TRAVERSANTES, EN PARTICULIER DE NITRURES DE SEMI-CONDUCTEURS DE TYPE III STRUCTURES SELON DES MOTIFS DE CRISTAUX PHOTONIQUES**
VERFAHREN ZUR HERSTELLUNG EINES STRUKTURIERTEN MATERIALS MIT DURCHGANGSÖFFNUNGEN, IM BESONDEREN NACH PHOTONENKRISTALLSTRUKTUREN STRUKTURIERTE NITRIDE DER TYP-III-HALBLEITER
METHOD FOR OBTAINING A STRUCTURED MATERIAL WITH THROUGH OPENINGS, IN PARTICULAR NITRIDES OF TYPE III SEMICONDUCTORS STRUCTURED ACCORDING TO PHOTONIC CRYSTAL PATTERNS

(30) Priorité: 18.01.2008 FR 0850335
(43) Date de publication de la demande: 29.09.2010
(73) Titulaire: Universite Paris-Sud, 91400 Orsay (FR); Centre National de la Recherche Scientifique, 75016 Paris (FR)
(72) Inventeur: DAVID, Sylvain, F-38240 Meylan (FR); BOUCAUD, Philippe, F-75013 Paris (FR); SEMOND, Fabrice, F-06250 Mougins Le Haut (FR)
(74) Mandataire: Pontet, Bernard
(86) Numéro de dépôt international: PCT/FR2009/050071
(87) Numéro de publication internationale: WO 2009/092981

(56) Documents cités:
- EP-A- 1 810 948
- EP-A- 1 826 822
- US-A1- 2003 213 428
- YANG Z ET AL: "GaN-on-patterned-silicon (GPS) technique for fabrication of GaN-based MEMS" SENSORS AND ACTUATORS A, ELSEVIER SEQUOIA S.A., LAUSANNE, CH, vol. 130-131, 14 août 2006 (2006-08-14), pages 371-378, XP025081869 ISSN: 0924-4247 [extrait le 2006-08-14]
- YANG Z ET AL: "Mechanical characterization of suspended GaN microstructures fabricated by GaN-on-patterned-silicon technique" APPLIED PHYSICS LETTERS, AIP, AMERICAN INSTITUTE OF PHYSICS, MELVILLE, NY, US, vol. 88, no. 4, 25 janvier 2006 (2006-01-25), pages 41913-041913, XP012082515 ISSN: 0003-6951
- KIM KEUNJOO ET AL: "Electroluminescence from lattice defects of photonic crystal slabs in blue-light-emitting diodes" JOURNAL OF APPLIED PHYSICS, AMERICAN INSTITUTE OF PHYSICS. NEW YORK, US, vol. 102, no. 4, 30 août 2007 (2007-08-30), pages 46105-46105, XP012101600 ISSN: 0021-8979
- KIM KEUNJOO ET AL: "Photonic crystal effect on light emission from InGaN/GaN multi-quantum-well structures" APPLIED PHYSICS LETTERS, AIP, AMERICAN INSTITUTE OF PHYSICS, MELVILLE, NY, US, vol. 90, no. 18, 2 mai 2007 (2007-05-02), pages 181115-181115, XP012094458 ISSN: 0003-6951
- RONG BIFENG ET AL: "Fabrication of two dimensional GaN nanophotonic crystals (31)" JOURNAL OF VACUUM SCIENCE AND TECHNOLOGY: PART B, AVS / AIP, MELVILLE, NEW YORK, NY, US, vol. 25, no. 6, 11 décembre 2007 (2007-12-11), pages 2632-2636, XP012105536 ISSN: 1071-1023
- LEI ET AL: "Highly ordered nanostructures with tunable size, shape and properties: A new way to surface nano-patterning using ultra-thin alumina masks" PROGRESS IN MATERIALS SCIENCE, PERGAMON PRESS, GB, vol. 52, no. 4, 28 février 2007 (2007-02-28), pages 465-539, XP005914165 ISSN: 0079-6425
- HOMMA YOSHIKAZU ET AL: "Aligned island formation using step-band networks on Si(111)" JOURNAL OF APPLIED PHYSICS, AMERICAN INSTITUTE OF PHYSICS. NEW YORK, US, vol. 86, no. 6, 15 septembre 1999 (1999-09-15), pages 3083-3088, XP012048605 ISSN: 0021-8979

## Description

La présente invention concerne un procédé d'obtention d'un élément de très faibles dimensions d'un matériau conduisant la lumière, parfois appelé un cristal photonique. Un tel élément présente le plus souvent la forme d'une plaque ou d'une membrane, qui est structurée selon un motif déterminé d'ouvertures traversantes d'une dimension transversale micrométrique ou inférieure. L'invention concerne aussi des composants incluant un tel cristal, ainsi qu'un système de fabrication d'un tel cristal ou composant.

De tels cristaux photoniques sont utilisés par exemple pour réaliser des composants optiques au sens large, souvent appelés photoniques lorsqu'ils présentent de très faibles dimensions et/ou optoélectroniques lorsqu'ils comportent une part de fonctionnement électrique ou électronique. Il peut s'agir par exemple de sources lumineuses telles que des diodes électroluminescentes (LED) ou des lasers. De telles plaques ou membranes peuvent aussi être utilisées pour réaliser des composants passifs ou actifs tels que des photodétecteurs ou des modulateurs, par exemple pour des composants de télécommunication par signaux optiques.

Les composés de nitrure de semi-conducteur du groupe III sont des matériaux semi-conducteurs à grande bande interdite permettant l'émission de lumière dans les gammes spectrales du visible et de l'ultraviolet. Leur émission dite « intrabande » peut également être utilisée pour une émission dans l'infrarouge. Leur rendement radiatif est particulièrement efficace. Ces composés comprennent par exemple le nitrure de gallium (GaN), le nitrure d'Aluminium (AIN) et le nitrure d'Indium (InN). Ces matériaux présentent donc un intérêt considérable pour l'obtention de composants émetteurs en optique et en optoélectronique tels que des diodes électroluminescentes et des lasers pour la gamme spectrale UV-visible. Les performances de ces composants peuvent être optimisées en structurant le matériau émetteur. La structuration permet de mieux maîtriser cette lumière émise.

Une des méthodes d'utilisation de ces propriétés consiste à y réaliser des microcavités à fort facteur de qualité, c'est-à-dire pour lesquelles le temps de vie d'un mode électromagnétique dans sa cavité est élevé. Ces forts facteurs de qualité sont utiles en particulier dans le cas de dispositifs émetteurs de lumière dédiés au traitement ou au transport de l'information. Ces microcavités favorisent le couplage de la lumière émise avec l'élément optique résonnant pour pouvoir tirer profit de certains effets physiques tel que l'effet Purcell. Cet effet augmente le taux d'émission spontanée et réduit le seuil d'émission des micro et nano lasers.

Ces micro-cavités peuvent être agencées selon différents motifs, et en particulier de façon à obtenir une modulation périodique de la constante diélectrique du matériau obtenu, formant ainsi un « cristal photonique » autour de la micro-cavité. De tels cristaux photoniques sont traditionnellement conçus en gravant des trous dans des matériaux diélectriques d'indice de réfraction élevé tels que les semi-conducteurs. Les dimensions recherchées pour ces trous sont de l'ordre de la centaine de nanomètres pour le diamètre, et de une à quelques centaines de nanomètres pour leur profondeur et leur écartement.

L'utilisation de cristaux photoniques offre un intérêt puisque leur bande interdite photonique permet de mieux confiner la lumière. De telles structures permettent l'ouverture de bande interdite, c'est-à-dire d'une gamme spectrale dans laquelle il n'existe pas de modes optiques. Dans les structures à cristaux photoniques, la lumière ne peut donc se propager. En générant des défauts dans ces structures périodiques, on obtient des modes optiques localisés dans les cavités à cristaux photoniques que l'on peut ajuster dans la gamme spectrale de la bande interdite photonique.

De telles structures photoniques sont des cristaux photoniques bidimensionnels combinés à une variation verticale de l'indice de réfraction. Ils sont en général efficaces pour une seule polarisation. Les réseaux de trous gravés dans un matériau d'indice élevé favorisent l'existence d'une bande interdite photonique en polarisation transverse électrique (« TE »), c'est à dire la configuration où le champ électrique est perpendiculaire à l'axe des trous. De telles structures impliquent des géométries qui respectent les symétries des champs électromagnétiques.

Afin de dissocier les deux polarisations, il est nécessaire que la structure possède une symétrie miroir verticale relativement au plan horizontal médian de la couche dans laquelle sont structurés les cristaux photoniques bidimensionnels. C'est-à-dire que la structure supérieure réplique la partie inférieure de la structure.

Concrètement, de telles structures nécessitent en particulier le respect de deux conditions :
- d'une part que les motifs gravés soient verticaux ;
- d'autre part qu'ils soient structurés sur la totalité de l'épaisseur de la couche optiquement guidante, c'est à dire traversant l'ensemble de la couche dans laquelle est structuré le cristal photonique bidimensionnel.

Une méthode connue pour réaliser de telles structures consiste à réaliser des réseaux de trous par gravure anisotrope dans un matériau nitrure. Or la gravure de trous profonds et réguliers présente un certain nombre de difficultés pour obtenir de bonnes caractéristiques géométriques, et ce d'autant plus que la profondeur gravée est importante par rapport aux dimensions transversales.

Cela est d'autant plus vrai pour certains matériaux dont le comportement chimique offre peu de possibilités de gravure, par exemple les nitrures et en particulier le nitrure d'aluminium.

Pour de tels matériaux, les seules gravures disponibles sont en général des gravures à base de plasma réactif (R.I.E.). Or, ces procédés de gravure réactive plasma, par exemple pour des composés de nitrure de semi-conducteur de groupe III, nécessitent un fort bombardement ionique et ne permettent pas actuellement de graver verticalement des motifs micro ou sub-micrométriques sur des épaisseurs suffisantes, c'est à dire de l'ordre d'une centaine de nanomètres environ, et/ou avec une qualité suffisante. On constate que les flans sont inclinés au minimum de 5 degrés par rapport à l'axe des trous ce qui limitent les possibilités et performances, par exemple pour de tels cristaux photoniques et de leurs micro et nano cavités résonnantes.

De plus, il est très intéressant de faire coexister des motifs de formes et de dimensions caractéristiques différentes, afin de réaliser des composants de type microcavité à fort facteur de qualité ou encore des composants de transition tels que des adaptateurs guide optique réfractif/guide à cristaux photoniques. Or, la vitesse de gravure est connue pour dépendre de la largeur des motifs, par exemple du diamètre des trous. La présence simultanée de motifs de différentes largeurs conduit à des niveaux ou profondeurs de gravures inhomogènes. Ainsi, dans le cas de motifs de tailles très inhomogènes, les trous peuvent ne pas atteindre le substrat ou leur verticalité peut varier selon la largeur des motifs gravés ce qui introduit dans chaque cas une asymétrie verticale et donc des pertes optiques.

Ainsi, ces techniques ne permettent pas de réaliser des structures possédant différentes largeurs de motifs ou différentes formes. La largeur des motifs gravés influence considérablement ce bombardement ionique et donc la vitesse de gravure de ces motifs. Il n'est donc pas possible dans le cas de géométrie variable d'avoir des profondeurs de gravure homogènes.

Enfin, puisque ces gravures sont particulièrement lentes et nécessitent un bombardement ionique important, la sélectivité de gravure est faible, c'est-à-dire le rapport de vitesse de gravure du matériau par rapport à la gravure parasite du masque. Dans le cas de motifs de faible largeur, il est possible de ne pas pouvoir graver verticalement la totalité de l'épaisseur du matériau, ou d'être limité par la nécessité d'utiliser une épaisseur de masque trop importante.

D'autres méthodes consistent à utiliser une croissance épitaxiale verticale locale soit au travers d'ouvertures dans une couche préalablement structurée et servant de masque, tel qu'un oxyde ou nitrure de silicium. Les motifs sont déterminés par des techniques de la micro et nano lithographie, puis gravés par exemple par un procédé de gravure plasma ou humide. La croissance s'effectue ensuite dans les ouvertures d'un tel masque.

Si la croissance se fait par un procédé d'épitaxie MBE (épitaxie par jet moléculaire), la présence des parois du masque influence la verticalité des dépôts par des effets d'ombrage. Pour une croissance obtenue par des procédés de type CVD (chemical vapor deposition), la croissance a un comportement de dépôt sélectif entre les matériaux du substrat et du masque. De ce fait, les parois du masque influencent aussi la croissance épitaxiale et donc la verticalité des motifs obtenus. Ceci se concrétise par un facettage involontaire des motifs épitaxiés. Ce problème est d'autant plus critique que dans les structures à cristaux photoniques l'épaisseur de la couche épitaxiée est de l'ordre de grandeur de la largeur des motifs.

Certaines méthodes existent, telle que celles décrites dans les documents WO 2007/081381 ou US 2003/0213428, pour produire des structurations d'un ordre de grandeur comparable, souvent appelés nano-fils ou nano-îles.

Ces méthodes consistent principalement à produire des trous d'une forme peu contraignante dans un substrat, pour faire croître le matériau visé à l'intérieur de ces trous. Ces trous sont remplis par croissance de type très sélective, telle que le procédé MOCVD.

Ce type de réalisation ne permet pas les formes, ni souvent les qualités, par exemple géométriques, qui sont recherchées dans de nombreux cas pour réaliser des cristaux photoniques de type plaque avec des performances intéressantes. Par exemple, il faudrait pour cela raccorder entre eux les nano-fils obtenus, ce qui présente en particulier une complexité non négligeable et pose un problème de qualité géométrique et de fiabilité. De plus, le remplissage des espaces rends les profils verticaux des nano-fils obtenus très dépendants de l'état de surface des trous, et sujet à de mauvaises performances en matière de régularité et conformité géométrique.

Un but de l'invention est de pallier les inconvénients de l'art antérieur. En particulier, il s'agit de permettre la réalisation d'un matériau présentant des ouvertures traversantes de largeurs différentes, sur une plus grande épaisseur, et qui soient d'une géométrie plus symétrique et plus régulière. Il s'agit aussi de permettre un choix arbitraire de la position et des formes et dimensions de ces ouvertures.

Ainsi, l'invention cherche à permettre la fabrication de composants de type photonique ou optronique qui soient plus performants, dans des caractéristiques plus variées, et/ou de façon plus simple et économique.

L'invention cherche aussi à obtenir ces caractéristiques de façon plus simple à mettre en oeuvre, en particulier dans des installations industrielles existantes.

Bien que la présente description présente essentiellement des exemples de structuration de matériaux à base de nitrures de semi-conducteurs de type III, un objectif de l'invention est aussi de permettre une telle structuration dans d'autres types de matériaux pour des dimensions d'un même ordre de grandeur.

La présente invention propose un procédé d'élaboration de couches structurées de type cristaux photoniques obtenues grâce à une épitaxie localisée induite par la structuration du substrat. Ce procédé s'applique plus particulièrement aux matériaux de type nitrure de semi-conducteur du groupe III, car il est très difficile d'utiliser les procédés usuels de fabrication des cristaux photoniques avec ces matériaux.

Un substrat, par exemple de silicium, est structuré profondément en utilisant des procédés connus de la micro et nanotechnologie : en particulier la lithographie optique ou électronique et la gravure plasma réactive.

La surface du substrat est alors libérée de sa résine afin d'être exposé lors de la croissance. Une couche de nitrure de semi-conducteur de type III (AIN, GaN, ..) est déposée par épitaxie, localisée sur la partie subsistant à la surface du substrat structuré. Cette couche forme ainsi une plaque ou membrane portant une structuration identique à la surface du substrat.

Ainsi, l'invention propose un procédé de réalisation d'un composant optique, photonique ou optoélectronique comprenant une plaque ou membrane (20, 306, 406, 506), dite photonique. Cette plaque ou membrane photonique est traversée, dans au moins une région intérieure et selon un motif déterminé, d'une pluralité d'ouvertures traversantes (307, 407, 507) d'une dimension transversale micrométrique ou inférieure. Ce procédé comprend les étapes suivantes :
- structuration de la surface d'un substrat par une gravure réalisant dans ledit substrat des trous selon ledit motif ;
- dépôt d'au moins une couche du matériau photonique formant la plaque ou membrane, par croissance épitaxiale anisotrope sur la surface structurée dudit substrat autour de l'ouverture des trous formant ce motif. C'est à dire que cette croissance est localisée sur les parties subsistantes de la surface du substrat. Typiquement, cette croissance se fait dans une direction sensiblement perpendiculaire à la surface du substrat.

Plus particulièrement, les ouvertures traversantes présentent des parois définissant un profil longitudinal sensiblement rectiligne et perpendiculaire au plan médian de la plaque ou membrane photonique.

Cette croissance de la plaque ou membrane photonique, anisotrope et verticale par rapport à la surface du substrat, permet un transfert direct de la géométrie bidimensionnelle des motifs du substrat dans la couche ainsi épitaxiée. Elle évite la gravure directe, en particulier pour les nitrures. Cette croissance permet d'obtenir des motifs complexes et de bonne qualité qui ne peuvent pas être obtenus par les techniques standards de fabrication des cristaux photoniques.

La réalisation de trous et de cristaux photoniques sans gravure, permet ainsi d'obtenir des géométries de meilleure qualité. Le fait de ne pas utiliser de bombardement ionique permet aussi d'obtenir des parois présentant une surface de meilleure qualité avec moins de rugosité.

Typiquement, le procédé peut comprendre en outre une étape ultérieure d'ablation ou de séparation du substrat d'avec la plaque ou membrane, en tout ou partie de sa surface.

Pour certaines applications en photonique et optoélectronique, le substrat préalablement structuré pourra être simplement gravé sous la couche épitaxiée, afin de libérer celle-ci et d'en faire une structure membranaire restant liée au substrat en certains endroits, par exemple sur son pourtour. Ce procédé peut servir à la réalisation de composants émetteurs tels que des diodes électroluminescentes et des lasers efficaces dans la gamme spectrale du rayonnement UV, visible et de l'infrarouge.

En particulier, cette étape d'ablation ou de séparation du substrat peut comprendre au moins une opération de gravure, sous la membrane ou plaque obtenue par attaque chimique sélective ou photo électrochimique sélective, possiblement par un passage d'éléments liquides ou gazeux par les ouvertures traversantes obtenues.

Dans le cas du silicium, l'ablation du substrat peut être faite par gravure chimique sélective par rapport à la couche épitaxiée (par exemple le nitrure d'élément III) de différentes façons. Elle peut être faite par exemple en gravure humide à base de KOH (hydroxyde de potassium), ou d'un mélange d'acides nitrique, acétique (ou de l'eau) et fluorhydrique, etc. Elle peut aussi être faite par exemple en gravure plasma isotrope utilisant des gaz fluorés.

Bien que plus délicate à mettre en oeuvre, la gravure photo électrochimique peut aussi être utilisée pour cette ablation ou séparation dans le cas de certains matériaux de substrat plus difficiles à graver, par exemple le carbure de silicium.

Les caractéristiques dimensionnelles du réseau pourront être adaptées en fonction de la longueur d'onde désirée. Ainsi, dans le cas du rayonnement ultraviolet, la structuration pourra typiquement comprendre des réseaux de périodes 140 nm et de diamètre de trous 100 nm et gravé sur une profondeur allant de une à plusieurs fois le diamètre des trous gravés. Dans le cas de rayonnement infrarouge, les dimensions des réseaux seront typiquement de l'ordre de un à plusieurs dizaines de microns.

Selon l'invention, les ouvertures traversantes du dispositif structuré obtenu sont déterminées par la structuration préalable du substrat, et forment un réseau pouvant comprendre au moins deux ouvertures présentant des dimensions transversales différentes l'une de l'autre

Grâce à l'invention, le réseau peut ainsi être constitué de trous de différentes tailles sans subir les mêmes difficultés qu'avec la gravure plasma directe des nitrures, telles que connues par l'art antérieur.

Plus particulièrement, l'invention propose de réaliser une épaisseur de matériau photonique déposé plus grande que la dimension transversale d'au moins une ouverture traversante, par exemple son diamètre, produisant ainsi pour cette ouverture traversante un rapport d'aspect supérieur à un.

Selon une particularité de l'invention, au moins une ouverture traversante peut présenter une dimension transversale inférieure ou égale à 1000 ou 800 nm, typiquement inférieure à 500 nm, voire inférieure à 200 nm et par exemple jusqu'à environ 80 nm.

De plus, l'invention permet aussi de réaliser des ouvertures de grandes dimensions, par exemple quelques microns, ainsi qu'une combinaison arbitraire d'ouvertures dont les dimensions peuvent varier dans la totalité de cette plage.

Le réseau ainsi gravé dans le substrat de silicium peut en particulier être agencé afin de fabriquer des micro et nano cavités résonnantes ou des structures guidantes.

De préférence, le silicium est choisi monocristallin d'orientation selon la direction <111>, mais le procédé peut aussi utiliser les autres directions cristallines <100> et <110>, voire des directions ne correspondant pas aux directions standards du réseau cristallin.

Cependant, selon les besoins de l'application, le substrat devant être préalablement structuré peut aussi être constitué d'autres matériaux, par exemple d'alliage silicium et/ou germanium, de silicium dopé, d'un substrat de type SOI (silicium sur isolant), ou GaAs, SiC, AIN, ZnO, Diamant, Saphir.

Le substrat de silicium est préalablement structuré en utilisant des procédés technologiques de la micro et nano technologie.

Lors de l'étape de croissance, les parois des trous qui structurent le substrat de silicium peuvent être recouvertes d'une fine couche de matériau de croissance, par exemple le nitrure d'aluminium. Ce dépôt est susceptible de gêner la sous gravure du silicium ultérieure lors de l'étape d'ablation ou de séparation. Ce recouvrement des parois de trous s'effectue sur une profondeur qui est de l'ordre de la largeur des trous.

Selon l'invention, l'étape de structuration du substrat comprend de préférence une gravure de trous de dimensions plus importantes dans leur profondeur que dans le plan dudit substrat. Cette gravure plus profonde du substrat permet ainsi de garder une surface libre de silicium au fond des trous, ce qui facilite la sous gravure utilisée pour l'ablation ou la séparation.

L'invention est particulièrement avantageuse pour obtenir une plaque ou membrane structurée en un composé majoritairement à base de nitrure d'un semi conducteur de type III.

Le matériau épitaxié pourra être préférentiellement de l'AIN mais pourra être aussi du GaN, ou un mélange homogène de matériaux de type AlₓGayIn_{1-x-y}N (avec 0≤x+y≤1), soit homogène soit en couches différentes.

Cette technique de réalisation peut également concerner les matériaux de type phosphure de gallium (GaP) et tout composé du même type.

Dans le même esprit, l'invention propose aussi un composant optique, photonique ou optronique, comprenant un tel cristal photonique, ou une plaque ou une membrane obtenues par un tel procédé.

Dans le même cadre, l'invention propose aussi un système de fabrication d'une telle plaque ou membrane ou d'un cristal photonique ou d'un composant optique, comprenant des moyens agencés pour mettre en oeuvre un tel procédé.

En permettant une sélection arbitraire de la position et de la forme, ainsi que de la largeur des ouvertures traversante et de l'épaisseur obtenue, l'invention permet d'améliorer les performances et la qualité des composants. L'invention permet aussi d'élargir les choix disponibles en matière d'émission spectrale et puissance des composants à cristaux photoniques obtenus, et de disposer d'une plus grande souplesse d'ajustement de leurs propriétés.

En réalisant des ouvertures traversantes de bonne qualité sur une profondeur importante dans la plaque ou membrane obtenue, l'invention permet d'obtenir des motifs avec de fort facteur de qualité, c'est-à-dire un fort rapport profondeur/largeur des trous.

L'invention permet aussi de simplifier et rendre la fabrication plus facile et plus simple, par exemple en évitant la gravure de certains matériaux difficiles tels que les nitrures. En effet, une part importante des opérations utilisées par le procédé selon l'invention relève des procédés de fabrication de la filière silicium, qui sont les procédés les mieux maîtrisés actuellement.

Elle permet de réaliser des motifs avec des ouvertures à flans « verticaux » pour la réalisation de cristaux photoniques où la verticalité est un aspect majeur dans l'obtention de cristaux photoniques pour des structures résonnantes à fort facteur de qualité.

Cette invention peut s'intégrer dans la conception de composants photoniques ou optoélectroniques utilisant des matériaux semi-conducteurs à base de nitrure de composés III, par exemple de type micro ou nano-laser à faible seuil, diodes électroluminescentes visibles ou UV ou infrarouge avec une efficacité d'extraction renforcée, sources de photons uniques à boîtes quantiques en cavité.

Cette technologie présente de nombreux degrés de liberté et accepte des géométries non accessibles par gravure plasma directe selon l'art antérieur.

Les applications industrielles couvrent un large spectre dans lequel les dispositifs optoélectroniques tiennent une place importante. Ces composants concerneront typiquement les sources de lumière pour l'éclairage général, les signalisations, les écrans (d'ordinateur, de téléphones, ...), mais aussi les diodes laser fonctionnant dans le bleu pour l'enregistrement de données et des détecteurs et diodes électroluminescentes couvrant le spectre visible et l'ultraviolet et émetteurs de lumière dans l'infrarouge.

D'autres particularités et avantages de l'invention ressortiront de la description détaillée d'un mode de mise en oeuvre nullement limitatif, et des dessins annexés sur lesquels :
- les FIGURE 1A et B sont des dessins à l'échelle d'après photo en perspective de deux coupes de cristaux photoniques réalisés par gravure selon l'art antérieur ;
- la FIGURE 2 est une vue schématique en perspective d'une plaque obtenue selon l'invention présentant des ouvertures traversantes selon un motif irrégulier pouvant être utilisé pour réaliser un cristal photonique ou un composant à cristal photonique ;
- la FIGURE 3 est une illustration schématique de la réalisation d'une membrane sur substrat selon un premier mode de réalisation de l'invention, avec couche intermédiaire de masque ;
- la FIGURE 4 est une illustration schématique de la réalisation d'une plaque selon un deuxième mode de réalisation de l'invention, avec couche sacrificielle sur le substrat ;
- la FIGURE 5 est une illustration schématique de la réalisation d'une membrane selon un troisième mode de réalisation de l'invention, avec couche d'accord sur le substrat ;
- les FIGURE 6A et B illustrent schématiquement la croissance anisotrope selon deux variantes optionnelles avec incidences différentes ;
- la FIGURE 7 est une image en microscopie électronique à balayage montrant en perspective une coupe d'un substrat silicium structuré par un procédé non « switché » de gravure profonde ;
- les FIGURE 8A et B représentent schématiquement et en microscopie électronique à balayage une coupe d'un substrat silicium structuré dans une variante optionnelle avec une gravure du silicium sous-jacente par rapport à l'interface supérieure de la plaque;
- les FIGURE 9 et FIGURE 10 sont des images en microscopie électronique à balayage montrant en perspective une coupe d'un masque de résine de lithographie pour la structuration du substrat, et respectivement d'un substrat silicium structuré grâce à ce masque de résine et par un procédé dit « switché » de gravure profonde ;
- les FIGURE 11 et FIGURE 12 sont des images en microscopie électronique à balayage représentant en perspective des échantillons clivés comprenant une couche de nitrure épitaxiée sur un substrat silicium ;
- la FIGURE 13 est une image en microscopie électronique à balayage montrant une membrane épitaxiée sur un substrat silicium et libérée par sous gravure ;
- la FIGURE 14 est une image en microscopie électronique à balayage montrant une couche photonique épitaxiée présentant des motifs de tailles différentes, réalisée selon l'invention.

Sauf précision spécifique, les schémas ne sont pas représentés à l'échelle.

### Illustrations de l'art antérieur

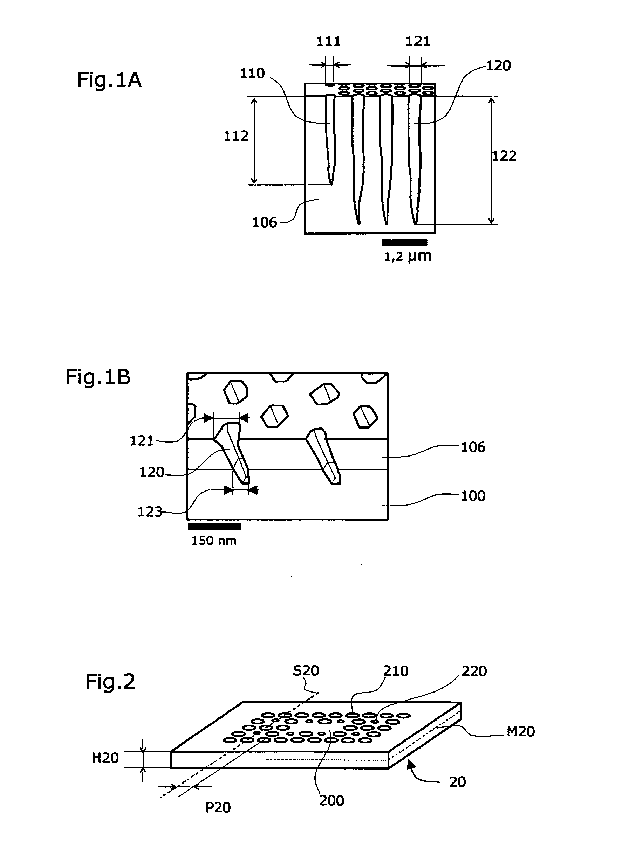

La FIGURE 1A est un dessin repris à l'échelle à partir d'une image en microscopie électronique à balayage d'une section clivée d'un cristal photonique obtenu selon l'art antérieur, par gravure plasma dans un semiconducteur III-V.

La vitesse de gravure dépend de la largeur des motifs gravés. Ainsi qu'on le voit dans la section du cristal 106, deux trous 110 et 120 de diamètres 111 et 121 différents présentent donc des profondeurs de gravure 112 et 122 très différentes. De plus, leur profil vertical est très irrégulier et se rétrécit nettement sur la partie extrême, ce qui fait que la plus grande épaisseur utilisable pour réaliser un cristal photonique se limiterait à la partie non rétrécie du trou 110 le plus étroit.

La FIGURE 1B est un dessin repris à l'échelle à partir d'une image en microscopie électronique à balayage d'une section clivée d'un cristal photonique obtenu selon l'art antérieur, gravé par plasma chloré dans une couche 106 de nitrure de gallium (GaN) porté par un substrat 100 de carbure de silicium (SiC).

On voit sur cette figure la variation de largeur des trous 120 en fonction de la profondeur, entre leur partie haute 121 et leur partie basse 123 du cristal 106, qui constitue un inconvénient de l'art antérieur.

### Description détaillée d'un mode de réalisation de l'invention

Le choix de la nature du substrat doit se faire d'une part en fonction de la compatibilité avec les matériaux à épitaxier, et d'autre part en fonction des gravures sélectives disponibles pour l'ablation ou séparation ultérieure d'avec le substrat. Les substrats de silicium (111) sont de bons candidats. Ils peuvent être gravés sélectivement par rapport aux composés III-N par simple gravure humide telles que les gravures KOH (hydroxyde de potassium), ou des mélanges d'acides (par exemple : nitrique, acétique et fluorhydrique), etc.

Dans ce procédé, l'épitaxie des matériaux se fait par une croissance localisée induite par la structuration du substrat afin de transférer dans les couches déposées la géométrie bidimensionnelle les motifs gravés préalablement dans le substrat. Cette croissance pourra, par exemple, être obtenue lors d'un dépôt d'AlN, ou d'AlGaN.

Cette propriété de croissance anisotrope normale à la surface, donc localisée en dehors des trous du substrat, est obtenue par une faible longueur de diffusion des espèces chimiques déposées à la surface de la couche épitaxiée et une technique d'épitaxie avec une forte directivité des flux moléculaires. Grâce à ce procédé, les différences de profondeur des motifs gravés préalablement dans les substrats n'ont pas d'incidence sur la structuration verticale des couches épitaxiées. Ainsi, ce procédé permet aussi de réaliser des motifs plus complexes comme par exemple des structures photoniques avec plusieurs (et/ou différents) trous par maille élémentaire du réseau.

La FIGURE 2 représente un cristal photonique en forme de plaque 20 obtenue selon l'invention, d'une épaisseur H20 de l'ordre d'une centaine de nanomètres. Cette plaque est structurée d'ouvertures traversantes 210, 220 selon un motif formant un réseau de période P20 avec différentes tailles de trous, et comportant une zone non percée dans une région 200 de ce réseau. Les ouvertures traversantes présentent un profil longitudinal rectiligne et perpendiculaire par rapport à la plaque 20, et plus précisément par rapport au plan médian M20 de cette plaque.

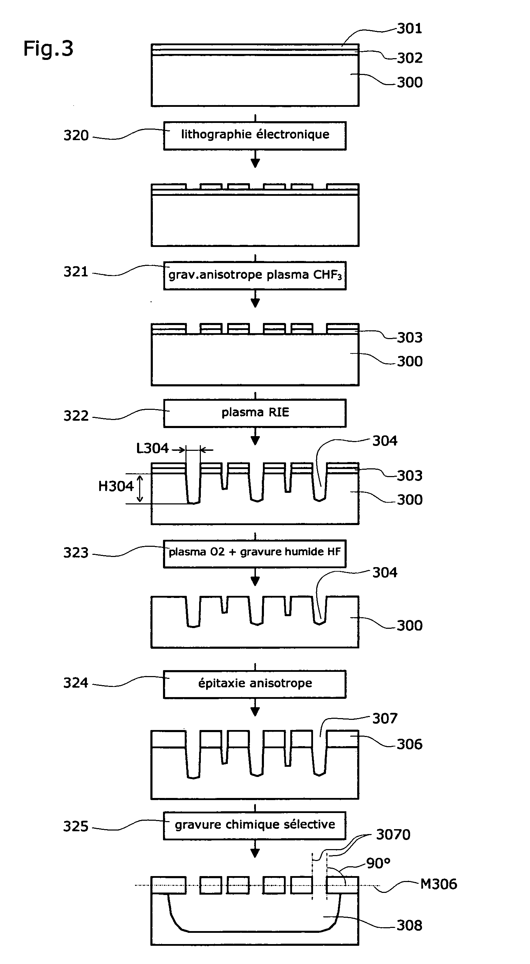

La FIGURE 3 illustre les étapes d'obtentions de cette plaque selon un mode de réalisation préféré, vues selon une section verticale (perpendiculaire au plan de la plaque) par la ligne S20 en trait mixte sur la FIGURE 2.

Le substrat 300 est constitué de silicium massif avec une orientation cristalline de type (111), qui est la plus compatible avec la structure wurtzite (réseau hexagonal).

L'étape de structuration du substrat 300 comprend au moins une opération de lithographie, par exemple de type électronique. Une couche 301 photosensible ou adaptée à la lithographie électronique permet d'obtenir une première structuration sur le substrat. Dans le cas d'une structuration de dimensions suffisamment grandes, il est aussi possible d'utiliser une lithographie optique.

Optionnellement, l'étape de structuration du substrat comprend au moins une opération de gravure 321 anisotrope d'une couche intermédiaire (par exemple en SiO₂ ou Si₃N₄) servant de masque pour la gravure dudit substrat.

Selon une option représentée sur cette figure, une couche 302 intermédiaire (ou un ensemble de couches) est intercalée entre la couche photosensible 301 et le substrat initial 300 pour former un masque supplémentaire afin de bénéficier d'une sélectivité suffisante pour la gravure du substrat. Cette couche 302 intermédiaire pourra être typiquement un matériau à base d'oxyde ou de nitrure de silicium.

Une gravure 321 anisotrope de la (ou des) couche intermédiaire 302 en un masque 303 est effectuée, par exemple par une procédé de gravure plasma tel que le plasma CHF₃, à travers les ouvertures de la couche 301 révélées par la lithographie.

L'étape de structuration du substrat comprend au moins une opération de gravure 322, par exemple par plasma ionique réactif.

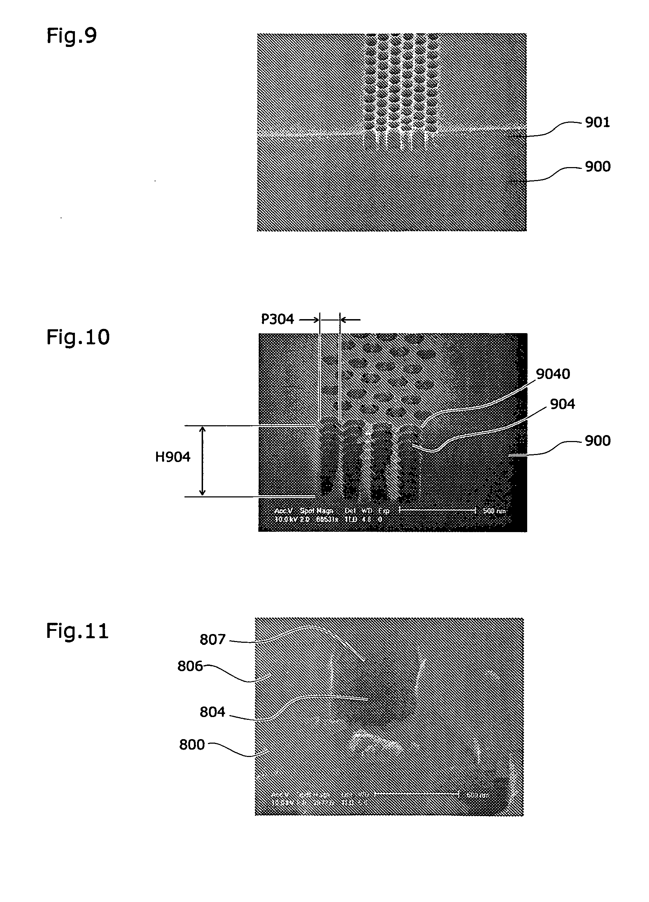

Le substrat 300 est gravé 322 par un procédé de gravure anisotrope à plasma ionique réactif, différent de celui de la gravure 321 du masque 303 intermédiaire. Ce procédé de gravure 322 est choisi pour permettre des gravures 304 profondes afin de réaliser les motifs possédant de forts facteurs d'aspect, c'est-à-dire un rapport profondeur sur largeur supérieur à un, voire supérieur à deux ou supérieur à quatre. Ce procédé de gravure profonde pourra être typiquement un procédé de gravure de type « switché », c'est à dire alternant gravure et passivation, par exemple le procédé dit « procédé Bosch », dont le résultat est présenté plus loin en FIGURE 10.

Les trous 304 obtenus dans le substrat 300 présentent des dimensions appelées transversales L304 et en profondeur appelées longitudinales H304.

La couche résine de masquage 301, ainsi que la couche de masquage intermédiaire 302 optionnelles, sont retirées 323 du substrat par exemple par gravure plasma (e.g. plasma O₂) et/ou en solution acide afin de libérer la surface supérieure du silicium 300.

Une croissance 324 épitaxiale anisotrope permet d'obtenir une couche 306 de nitrure de semi-conducteur de type III, par exemple AIN ou GaN ou InN, possiblement en plusieurs couches de compositions différentes, structurée de motifs formés d'ouvertures 307 traversantes, conformément à la structuration du substrat par les trous 304 préalablement gravés dans le substrat 300.

En une étape 325, le substrat est gravé pour libérer la couche 306 épitaxiée et en faire une membrane suspendue au dessus de l'espace 308 libéré dans le substrat 300. Cette gravure s'effectue par exemple en solution liquide ou gazeuse réalisant une gravure chimique sélective à travers les ouvertures 307 de la membrane 306 ainsi obtenue.

Ainsi, les ouvertures traversantes 307 obtenues présentent bien des parois 3070 définissant un profil longitudinal rectiligne et perpendiculaire par rapport à la plaque 306, et plus précisément par rapport au plan médian M306 de cette plaque.

### Autres modes de réalisation

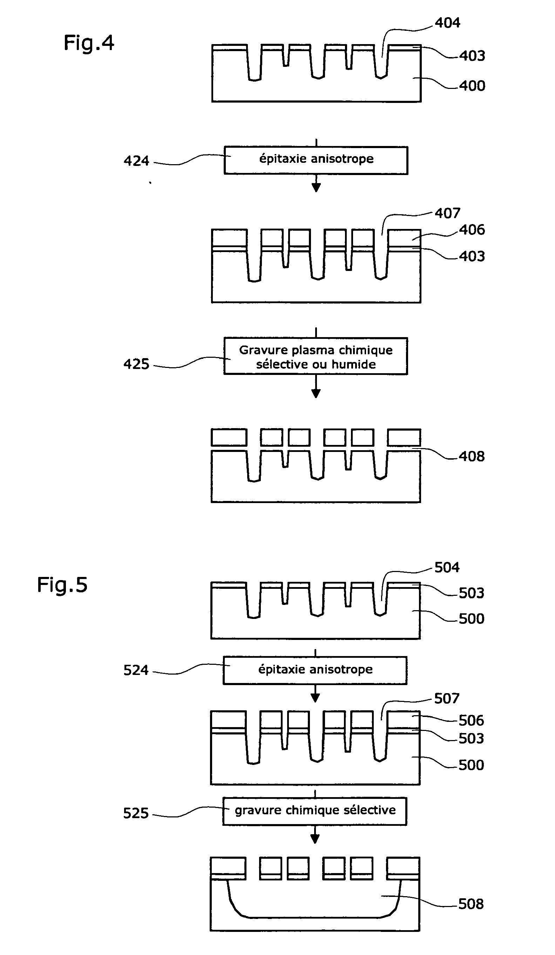

D'autres modes de réalisation sont proposés en FIGURE 4 et FIGURE 5, qui peuvent être combinés entre eux ou avec le mode de réalisation principal.

Ainsi, en FIGURE 4 sont représentées certaines étapes, postérieures à la gravure 322 du substrat 400, de la réalisation d'une plaque 406 selon un deuxième mode de réalisation de l'invention pouvant être combiné avec d'autres modes de réalisation.

Dans ce deuxième mode de réalisation, le procédé comprend la réalisation d'au moins une couche 403 intermédiaire, dite sacrificielle, entre le substrat 400 et la plaque 406 ou membrane.

Cette couche sacrificielle peut être réalisée par épitaxie anisotrope après la gravure 322 du substrat 400 et avant le dépôt 424 du matériau photonique 406. Elle peut aussi être réalisée par des méthodes connues, avant la gravure 320 à 322 du substrat 400.

La plaque ou membrane 406 est épitaxiée 424 sur cette couche sacrificielle 403. Selon l'accord de maille du matériau sacrificiel 403 par rapport à celui du substrat 400, l'épaisseur de la couche sacrificielle sera plus ou moins importante afin de limiter les dislocations dans le matériau de la membrane 406.

Cette couche sacrificielle 403 est ensuite détruite ou dégradée au cours de l'étape d'ablation ou de séparation 425 de ce substrat.

Cette variante peut être intéressante en particulier si le substrat est d'un matériau difficile à graver pour la séparation 425, par exemple une couche sacrificielle de silicium sur un substrat de carbure de silicium.

En FIGURE 5 sont représentées certaines étapes, postérieures à la gravure 322 du substrat 500, de la réalisation d'une membrane 506 selon un troisième mode de réalisation de l'invention pouvant être combiné avec d'autres modes de réalisation.

Dans ce troisième mode de réalisation, le procédé comprend la réalisation d'au moins une couche 503 intermédiaire, dite d'accord, entre le substrat 500 et la plaque ou membrane 506.

Cette couche sacrificielle peut être réalisée par épitaxie anisotrope après la gravure 322 du substrat 500 et avant le dépôt 524 du matériau photonique 506. Elle peut aussi être réalisée par des méthodes connues, avant la gravure 320 à 322 du substrat 500.

Cette couche d'accord 503 est d'un matériau différent du substrat et choisi pour sa capacité à recevoir une croissance épitaxiale anisotrope de meilleure qualité, par exemple en recouvrant le substrat de silicium d'une couche de nitrure ou d'une autre couche favorisant l'accord de maille entre le matériau du substrat 500 et la couche 506 épitaxiée de nitrure de semi-conducteur de groupe III.

Il est à noter que la couche sacrificielle et la couche d'accord peuvent être confondues en une seule et même couche en choisissant un matériau qui remplit les deux fonctions.

Ces deux couches sacrificielles et d'accord peuvent aussi être combinées dans un même mode de réalisation non représenté ici, et être superposées dans un ordre ou dans l'autre.

Dans les premier et troisième modes de réalisation représentés ici en FIGURE 3 et FIGURE 5, le substrat 300, 500 est gravé 325, 525 seulement dans une région partielle 308, 508 par rapport au matériau 306, 506 épitaxié. Ce matériau formé reste ainsi suspendu et peut être qualifié de membrane.

Alternativement ou de façon combinée en différentes régions d'une même tranche (« wafer ») de substrat, le substrat 400 peut être gravé sur la totalité de la surface du matériau 406 épitaxié. Ainsi qu'illustré par exemple en FIGURE 4, ce matériau 406 sera alors complètement séparé 425 du substrat 400, et pourra alors être qualifié de plaque.

Dans une alternative non représentée ici, le substrat peut aussi être détruit ou dégradé depuis sa face opposée à la plaque formée, selon des techniques connues.

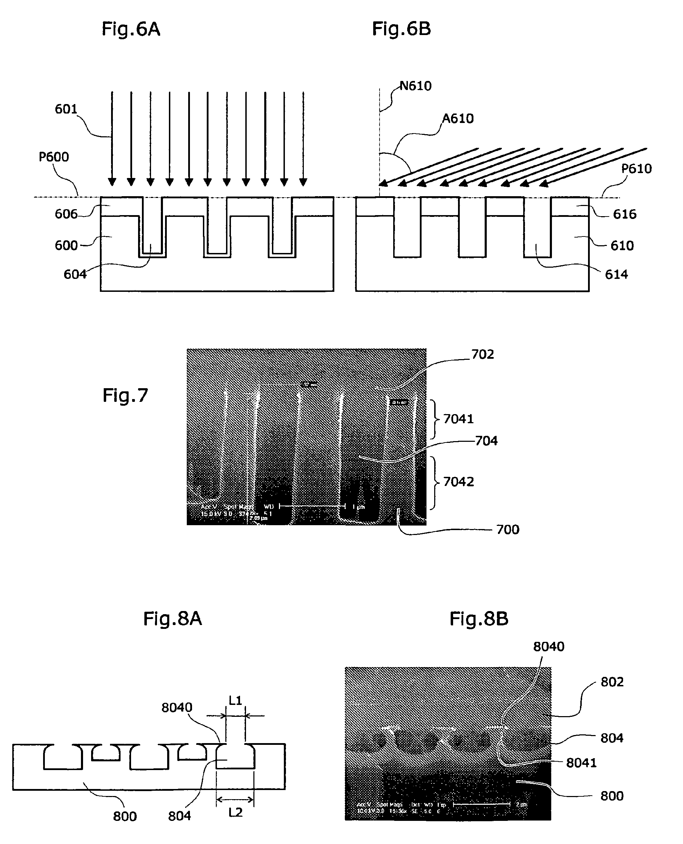

En FIGURE 6A et FIGURE 6B sont illustrées deux variantes possibles, pouvant être combinées entre elles, pour la croissance anisotrope localisée 324, 424, 524 du matériau du cristal sur le substrat structuré.

En FIGURE 6A, la croissance anisotrope se fait selon une direction d'apport 601 de matériau, typiquement par un procédé d'épitaxie par jets moléculaires (MBE), sensiblement normale au plan P600 de la surface du substrat 600. Ainsi que représenté sur le schéma, le matériau 606 en croissance peut alors avoir tendance à s'accumuler aussi sur les parois verticales des trous 604 du substrat, ce qui nuit à la verticalité et à la symétrie des ouvertures de la plaque ou membrane obtenue, et dégrade la géométrie en renforçant la rugosité des parois.

En FIGURE 6B est représentée une variante avantageuse proposée par l'invention. Une direction d'apport 611 est réalisée de façon oblique voire rasante, par exemple selon un angle A610 supérieur à 45° voire supérieur à 60° par rapport à la normale N610 au plan P610 de la surface du substrat 610. Cette direction oblique ou rasante peut être réalisée par exemple en modifiant la géométrie du réacteur pour augmenter l'angle entre la normale du substrat et l'axe des cellules d'effusion. Cette variante offre un plus fort effet d'ombrage lors du dépôt, ce qui provoque peu ou pas de dépôt sur les flancs des motifs gravés dans les substrats et au fond des motifs.

La FIGURE 7 représente un substrat 700 structuré de trous borgnes 704, d'ouvertures circulaires d'un diamètre d'environ 590 nm et un pas de motif d'environ 1300 nm. Le substrat 700 porte encore le masque 702 de SiO₂ qui a servi à réaliser cette structuration. Sur cette photo, on voit que les trous 704 du substrat structuré présentent un rayon plus grand d'environ 30 nm en partie haute 7041 qu'en partie basse 7042. Une telle différence serait gênante pour une ouverture traversante qui serait gravée directement dans un cristal photonique selon l'art antérieur. Grâce à l'invention, une telle imperfection dans la gravure des trous du substrat n'empêche pas la réalisation d'ouvertures traversantes d'une géométrie satisfaisante dans la couche de nitrure qui sera épitaxiée sur ce substrat.

Les FIGURE 8A et FIGURE 8B représentent une variante optionnelle pouvant être combinée avec les autres modes de réalisation. Ces figures montrent en coupe un substrat silicium 800 structuré avec des trous présentant une dimension transversale plus importante sous l'interface du substrat qu'au niveau de cette interface elle-même.

La FIGURE 8A est un schéma représentant le substrat après structuration. La FIGURE 8B est une photo représentant ce même substrat structuré portant encore le masque 302 de SiO₂ qui a servi à réaliser cette structuration.

Dans cette variante, l'étape de structuration 322 du substrat comprend une gravure de trous 804 dont les dimensions transversales L2 en profondeur sont plus grandes que leurs dimensions transversales L1 à la surface de ce substrat 800. Cette différence produit un bord 8040 aminci en forme de bec autour de l'ouverture du trou 804, et les parois 8041 situées en dessous de ce bec 8040 sont ainsi moins susceptibles de recevoir un dépôt de nitrure lors de la croissance ultérieure du cristal photonique sur le substrat.

Cette différence de largeurs, lorsqu'elle est obtenue par des opérations de gravure, est parfois appelée une « sous-gravure », au sens on l'on grave en dessous (en profondeur) plus qu'en surface. Ces opérations peuvent par exemple combiner une gravure anisotrope pour réaliser le trou, suivie d'une gravure isotrope pour élargir les dimensions du trou en dessous de la surface.

Les FIGURE 9 et FIGURE 10 représentent respectivement un masque de résine 901, et le substrat structuré 900 obtenu à partir de ce masque par une gravure 322 selon le procédé « switché » dit « procédé Bosch ». Un tel procédé est particulièrement indiqué pour obtenir une bonne géométrie des trous 904, en particulier dans le cas représenté ici où ces trous 904 sont de petites dimensions, ici environ 140 nm de diamètre L904 pour une profondeur H904 d'environ 500 nm, et pour un pas de motif d'environ 180 nm. De plus, ainsi qu'on le voit sur la photo, les caractéristiques d'un tel procédé switché sont tout à fait adaptées pour obtenir ou amplifier une certaine « sous-gravure », c'est à dire une gravure plus large en dessous de la surface du substrat et formant un bec 9040 au niveau de cette surface.

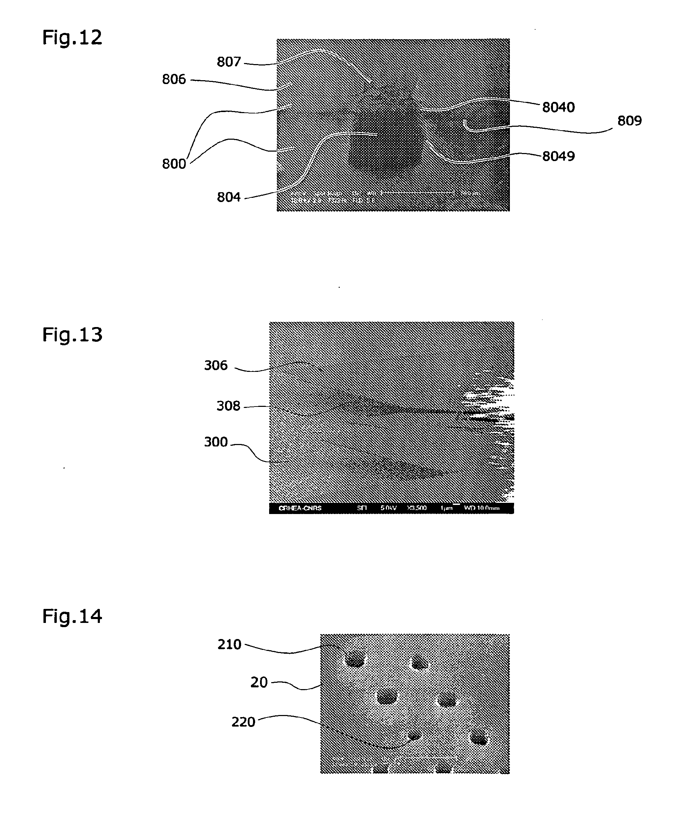

Les FIGURE 11 et FIGURE 12 représentent en perspective et selon deux coupes différentes une couche de nitrure d'aluminium épitaxiée sur un substrat silicium structuré par une gravure anisotrope classique et légèrement « sous-gravé ». Ces photos représentent le cristal après formation mais avant la gravure isotrope du substrat 800. En FIGURE 12, on voit en particulier que le trou 804 du substrat 800 présente une largeur moindre à son ouverture qu'en profondeur, formant ainsi un bec 8040, ce qui a permis de limiter les dépôts de nitrure sur les parois 8049 de silicium. Dans cette FIGURE 12, il est à noter que la partie du substrat de silicium proche de la surface ne paraît séparée du reste du substrat que par un effet d'optique créant une zone d'ombre 809 irrégulière, laquelle est due à l'opération de coupe sectionnelle, ou clivage, réalisée ultérieurement pour rendre l'intérieur du trou visible sur la photo.

La FIGURE 13 est une image en microscopie électronique à balayage montrant une membrane épitaxiée 306 sur un substrat silicium 300 et libérée par une sous gravure 325 d'un espace intermédiaire 308.

La FIGURE 14 est une image en microscopie électronique à balayage montrant une couche épitaxiée présentant des motifs de tailles différentes. Ces motifs ont été transférés par l'étape d'épitaxie 324 depuis les motifs préalablement gravés dans le substrat 300. On voit que des différences significatives de taille (en dimensions transversales), au moins du simple au double, sont permises grâce à l'invention sans que cela se traduise par une différence de profondeur de l'ouverture traversante de la plaque ou membrane 20. En effet, cette épaisseur est fixée par la durée et la vitesse du dépôt. Ce procédé ne présente pas à priori de limites sur les différences de taille de trous traversants que l'on peut obtenir.

Il est à noter que l'échantillon de la FIGURE 14 ne constitue qu'un test de démonstration visant à obtenir des ouvertures traversantes 210 et 220 de dimensions transversales différentes sur un même cristal photonique 20. La forme transversale des ouvertures traversantes dépend de celles des trous réalisés pour la structuration préalable du substrat de croissance. Sur cet échantillon, la régularité de cette forme ne représente pas les meilleures possibilités atteignables par le procédé selon l'invention.

Bien sûr, l'invention n'est pas limitée aux exemples qui viennent d'être décrits et de nombreux aménagements peuvent être apportés à ces exemples sans sortir du cadre de l'invention.

## Revendications

1. Procédé de fabrication d'un composant optique, photonique ou optoélectronique comprenant une plaque ou membrane dite photonique (20, 306, 406, 506) traversée, dans au moins une région intérieure et selon un motif déterminé, d'une pluralité d'ouvertures traversantes (307, 407, 507) d'une dimension transversale micrométrique ou inférieure, ledit procédé comprenant les étapes suivantes :
- structuration (320 à 322) de la surface d'un substrat (300) par une gravure réalisant dans ledit substrat des trous (304, 404, 504, 604, 704, 804, 904) selon ledit motif;
- dépôt d'au moins une couche du matériau photonique formant la plaque ou membrane, par croissance épitaxiale anisotrope (324, 424, 524) sur la surface structurée dudit substrat autour de l'ouverture desdits trous (304 à 904).

2. Procédé selon la revendication 1, **caractérisé en ce qu'**il comprend en outre une étape ultérieure (325, 425, 525) d'ablation ou de séparation du substrat (300, 400, 500) d'avec la plaque ou membrane (306, 406, 506), en au moins une région (308, 408, 508).

3. Procédé selon l'une quelconque des revendications précédentes, **caractérisé en ce que** les ouvertures traversantes (307) présentent des parois (3070) définissant un profil longitudinal sensiblement rectiligne et perpendiculaire au plan médian (M20) de la plaque ou membrane photonique (20, 306).

4. Procédé selon l'une quelconque des revendications précédentes, **caractérisé en ce que** les ouvertures traversantes (307, 407, 507) forment un réseau comprenant au moins deux ouvertures (210, 220) présentant des dimensions transversales différentes l'une de l'autre.

5. Procédé selon l'une quelconque des revendications précédentes, **caractérisé en ce que** l'épaisseur de matériau photonique déposée, rapportée aux dimensions transversales d'au moins une ouverture traversante, produit pour ladite ouverture traversante un rapport d'aspect d'au moins un.

6. Procédé selon l'une quelconque des revendications précédentes, **caractérisé en ce qu'**au moins une ouverture traversante présente une dimension transversale inférieure ou égale à 500 nm.

7. Procédé selon l'une quelconque des revendications précédentes, **caractérisé en ce que** la plaque ou membrane structurée (20, 306, 406, 506) est en un composé majoritairement à base de nitrure d'un semi conducteur de type III.

8. Procédé selon l'une quelconque des revendications précédentes, **caractérisé en ce que** l'étape de croissance anisotrope (325, 425, 525) comprend au moins une opération de croissance par apport moléculaire selon une direction incidente (611) formant un angle (A611) d'au moins 45° avec la normale à la surface (P610) du substrat (600).

9. Procédé selon l'une quelconque des revendications précédentes, **caractérisé en ce que** le substrat (300, 500, 600) est en silicium monocristallin d'orientation <111>.

10. Procédé selon l'une quelconque des revendications précédentes, **caractérisé en ce qu'**il comprend la réalisation d'au moins une couche (503) intermédiaire, dite d'accord, entre le substrat (500) et la plaque ou membrane (506), ladite couche d'accord (503) étant d'un matériau différent du substrat et choisi pour sa capacité à recevoir une croissance épitaxiale anisotrope de bonne qualité.

11. Procédé selon l'une quelconque des revendications précédentes, **caractérisé en ce que** l'étape (320, 321, 322) de structuration du substrat (300) comprend une gravure d'ouvertures (304) de dimensions plus importantes dans leur profondeur (H304) que dans le plan de la surface dudit substrat (L304).

12. Procédé selon l'une quelconque des revendications précédentes, **caractérisé en ce que** l'étape de structuration (320, 321, 322) du substrat (300) comprend une gravure d'ouvertures dont les dimensions transversales (L1, respectivement L2) sont plus faibles à la surface dudit substrat qu'en profondeur.

13. Procédé selon l'une quelconque des revendications précédentes, **caractérisé en ce que** l'étape de structuration du substrat (300) comprend au moins une opération (320) de gravure par lithographie électronique ou optique d'au moins une couche (301, 302) servant de masque pour la gravure (321, 322) dudit substrat.

14. Procédé selon la revendication 2 ou l'une quelconque des revendications précédentes 3 à 13 en dépendance de la revendication 2, **caractérisé en ce que** l'étape (325, 425, 525) d'ablation ou de séparation du substrat (300, 400, 500) comprend au moins une opération de gravure, sous la membrane (306, 506) ou plaque (406) obtenue, par attaque chimique sélective ou photo électrochimique sélective.

15. Procédé selon la revendication 14, **caractérisé en ce que** l'étape (325, 425, 525) d'ablation ou de séparation du substrat (300, 400, 500) comprend au moins un passage d'éléments liquides ou gazeux par les ouvertures traversantes (307, 407, 507) obtenues.

16. Composant comprenant au moins une plaque ou une membrane photonique obtenue par un procédé selon l'une quelconque des revendications 1 à 15.

17. Système de fabrication d'une plaque ou d'une membrane ou d'un cristal photonique ou d'un composant optique ou optoélectronique, **caractérisé en ce qu'**il comprend des moyens agencés pour mettre en oeuvre un procédé selon l'une quelconque des revendications 1 à 15.

## Claims

1. Method of manufacture of a optical, photonic or optoelectronic component, comprising a so-called photonic slab or membrane (20, 306, 406, 506) that is traversed, in at least one internal region and according to a predetermined pattern, by a plurality of through openings (307, 407, 507) having a micrometric or sub-micrometric transverse dimension, said method comprising the following steps:
- structuring (320 to 322) of the surface of a substrate (300) by an etching that produces holes in said substrate (304, 404, 504, 604, 704, 804, 904) according to said pattern;
- depositing at least one layer of the photonic material forming the slab or membrane, by anisotropic epitaxial growth (324, 424, 524) on the structured surface of said substrate around the opening of said holes (304 to 904).

2. Method according to claim 1, **characterized in that** it further comprises a subsequent step (325, 425, 525) of ablation or separation of the substrate (300, 400, 500) from the slab or membrane (306, 406, 506), in at least one region (308, 408, 508).

3. Method according to any one of the preceding claims, **characterized in that** the through openings (307) have walls (3070) defining a longitudinal profile approximately rectilinear and perpendicular to the mid-plane (M20) of the photonic slab or membrane (20, 306).

4. Method according to any one of the preceding claims, **characterized in that** the through openings (307, 407, 507) form an array comprising at least two openings (210, 220) having transverse dimensions different from one another.

5. Method according to any one of the preceding claims, **characterized in that** the thickness of photonic material deposited, relative to the transverse dimensions of at least one through opening, produces an aspect ratio of at least one for said through opening.

6. Method according to any one of the preceding claims, **characterized in that** at least one through opening has a transverse dimension less than or equal to 500 nm.

7. Method according to any one of the preceding claims, **characterized in that** the structured slab or membrane (20, 306, 406, 506) is of a compound predominantly based on a nitride of a type III semiconductor.

8. Method according to any one of the preceding claims, **characterized in that** the anisotropic growth step (325, 425, 525) comprises at least one operation of growth by supply of molecules according to an incident direction (611) making an angle (A611) of at least 45° with the normal to the surface (P610) of the substrate (600).

9. Method according to any one of the preceding claims, **characterized in that** the substrate (300, 500, 600) is in single-crystal silicon of <111> orientation.

10. Method according to any one of the preceding claims, **characterized in that** it comprises the production of at least one intermediate layer (503), called tuning layer, between the substrate (500) and the slab or membrane (506), said tuning layer (503) being of a different material from the substrate and selected for its capacity to receive anisotropic epitaxial growth of good quality.

11. Method according to any one of the preceding claims, **characterized in that** the step (320, 321, 322) of structuring of the substrate (300) comprises the etching of openings (304) with larger dimensions in depth (H304) than in the surface plane of said substrate (L304).

12. Method according to any one of the preceding claims, **characterized in that** the step of structuring (320, 321, 322) of the substrate (300) comprises etching of openings whose transverse dimensions (L1, L2 respectively) are smaller at the surface of said substrate than at depth.

13. Method according to any one of the preceding claims, **characterized in that** the step of structuring of the substrate (300) comprises at least one operation (320) of etching by electronic or optical lithography of at least one layer (301, 302) serving as a mask for the etching (321, 322) of said substrate.

14. Method according to claim 2 or any one of claims 3 to 13 in dependence from claim 2, **characterized in that** the step (325, 425, 525) of ablation or separation of the substrate (300, 400, 500) comprises at least one operation of etching, under the membrane (306, 506) or slab (406) obtained, by selective chemical or selective photo-electrochemical attack.

15. Method according to claim 14, **characterized in that** the step (325, 425, 525) of ablation or separation of the substrate (300, 400, 500) comprises at least one passage of liquid or gaseous elements through the through openings (307, 407, 507) obtained.

16. Component comprising at least one photonic slab or membrane obtained by a method according to any one of claims 1 to 15.

17. System for the manufacture of a slab or membrane or photonic crystal or an optical or optoelectronic component, **characterized in that** it comprises means arranged for applying a method according to any one of claims 1 to 15.

## Patentansprüche

1. Verfahren zur Herstellung eines optischen, photonischen oder optoelektronischen Bauelements, das eine sogenannte photonische Platte oder Membran (20, 306, 406, 506) umfasst, welche in wenigstens einem Innenbereich und entsprechend einem bestimmten Muster von einer Vielzahl von durchgehenden Öffnungen (307, 407, 507) mit einer mikrometrischen oder kleineren Querabmessung durchquert ist, wobei das Verfahren die folgenden Schritte umfasst:
- Strukturieren (320 bis 322) der Oberfläche eines Substrats (300) durch ein Ätzen, das in dem Substrat Löcher (304, 404, 504, 604, 704, 804, 904) entsprechend dem Muster erzeugt,
- Abscheiden wenigstens einer Schicht des die Platte oder Membran bildenden photonischen Materials durch anisotropes epitaxiales Wachstum (324, 424, 524) auf der strukturierten Oberfläche des Substrats um die Öffnung der Löcher (304 bis 904) herum.

2. Verfahren nach Anspruch 1, **dadurch gekennzeichnet, dass** es ferner einen nachfolgenden Schritt (325, 425, 525) zum Ablösen oder Abtrennen des Substrats (300, 400, 500) von der Platte oder Membran (306, 406, 506) in wenigstens einem Bereich (308, 408, 508) umfasst.

3. Verfahren nach einem der vorhergehenden Ansprüche, **dadurch gekennzeichnet, dass** die durchgehenden Öffnungen (307) Wände (3070) aufweisen, die ein im Wesentlichen geradliniges und zu der Mittelebene (M20) der photonischen Platte oder Membran (20, 306) senkrechtes Längsprofil definieren.

4. Verfahren nach einem der vorhergehenden Ansprüche, **dadurch gekennzeichnet, dass** die durchgehenden Öffnungen (307, 407, 507) ein Netz bilden, das wenigstens zwei Öffnungen (210, 220) mit voneinander abweichenden Querabmessungen umfasst.

5. Verfahren nach einem der vorhergehenden Ansprüche, **dadurch gekennzeichnet, dass** die abgeschiedene Dicke des photonischen Materials, bezogen auf die Querabmessungen wenigstens einer durchgehenden Öffnung, für die genannte durchgehende Öffnung ein Aspektverhältnis von wenigstens eins erzeugt.

6. Verfahren nach einem der vorhergehenden Ansprüche, **dadurch gekennzeichnet, dass** wenigstens eine durchgehende Öffnung eine Querabmessung von unter oder gleich 500 nm aufweist.

7. Verfahren nach einem der vorhergehenden Ansprüche, **dadurch gekennzeichnet, dass** die strukturierte Platte oder Membran (20, 306, 406, 506) aus einer Verbindung besteht, die zum größten Teil auf Basis eines Nitrids eines Typ-III-Halbleiters ist.

8. Verfahren nach einem der vorhergehenden Ansprüche, **dadurch gekennzeichnet, dass** der Schritt des anisotropen Wachstums (325, 425, 525) wenigstens einen Wachstumsvorgang durch molekularen Auftrag in einer Einfallsrichtung (611), die mit der Normalen zur Oberfläche (P610) des Substrats (600) einen Winkel (A611) von wenigstens 45° bildet, umfasst.

9. Verfahren nach einem der vorhergehenden Ansprüche, **dadurch gekennzeichnet, dass** das Substrat (300, 500, 600) aus monokristallinem Silizium mit der Orientierung <111> besteht.

10. Verfahren nach einem der vorhergehenden Ansprüche, **dadurch gekennzeichnet, dass** es die Ausbildung wenigstens einer Zwischenschicht (503), sogenannten Übereinstimmungsschicht, zwischen dem Substrat (500) und der Platte oder Membran (506) umfasst, wobei die Übereinstimmungsschicht (503) aus einem Material besteht, das sich von dem Substrat unterscheidet und aufgrund seiner Fähigkeit zur Aufnahme eines anisotropen epitaxialen Wachstums guter Qualität gewählt ist.

11. Verfahren nach einem der vorhergehenden Ansprüche, **dadurch gekennzeichnet, dass** der Schritt (320, 321, 322) der Strukturierung des Substrats (300) ein Ätzen von Öffnungen (304) mit größeren Abmessungen in ihrer Tiefe (H304) als in der Ebene der Oberfläche des Substrats (L304) umfasst.

12. Verfahren nach einem der vorhergehenden Ansprüche, **dadurch gekennzeichnet, dass** der Schritt der Strukturierung (320, 321, 322) des Substrats (300) ein Ätzen von Öffnungen umfasst, deren Querabmessungen (L1 bzw. L2) an der Oberfläche des Substrats geringer als in der Tiefe sind.

13. Verfahren nach einem der vorhergehenden Ansprüche, **dadurch gekennzeichnet, dass** der Schritt der Strukturierung des Substrats (300) wenigstens einen Vorgang (320) eines Ätzens mittels elektronischer oder optischer Lithographie wenigstens einer Schicht (301, 302), die für das Ätzen (321, 322) des Substrats als Maske dient, umfasst.

14. Verfahren nach Anspruch 2 oder einem der vorhergehenden Ansprüche 3 bis 13 in Abhängigkeit von Anspruch 2, **dadurch gekennzeichnet, dass** der Schritt (325, 425, 525) des Ablösens oder Abtrennens des Substrats (300, 400, 500) wenigstens einen Ätzvorgang unter der erhaltenen Membran (306, 506) oder Platte (406) durch selektives chemisches oder selektives photoelektrochemisches Ätzen umfasst.

15. Verfahren nach Anspruch 14, **dadurch gekennzeichnet, dass** der Schritt (325, 425, 525) des Ablösens oder Abtrennens des Substrats (300, 400, 500) wenigstens einen Durchgang von flüssigen oder gasförmigen Elementen durch die erhaltenen durchgehenden Öffnungen (307, 407, 507) umfasst.

16. Bauelement, das wenigstens eine durch ein Verfahren nach einem der Ansprüche 1 bis 15 erhaltene photonische Platte oder Membran umfasst.

17. System zur Herstellung einer photonischen Platte oder einer photonischen Membran oder eines photonischen Kristalls oder eines optischen oder optoelektronischen Bauelements, **dadurch gekennzeichnet, dass** es Mittel umfasst, die dazu eingerichtet sind, ein Verfahren nach einem der Ansprüche 1 bis 15 durchzuführen.
